# EUROPÄISCHE PATENTSCHRIFT

(11) **EP 0 565 820 B1**
(45) Veröffentlichungstag und Bekanntmachung des Hinweises auf die Patenterteilung: **04.09.1996**
(21) Anmeldenummer: 93101691.9
(22) Anmeldetag: 04.02.1993
(51) Int. Cl.: F16L 19/06, F16L 19/08

(54) **Rohrverschraubung**
Threaded joint
Raccord vissé

(30) Priorität: 16.04.1992 DE 4212771
(43) Veröffentlichungstag der Anmeldung: 20.10.1993
(73) Patentinhaber: Firma Franz Viegener II, D-57439 Attendorn (DE)
(72) Erfinder: Viegener, Walter, W-5952 Attendorn (DE)
(74) Vertreter: Stracke, Alexander, Dipl.-Ing.

(56) Entgegenhaltungen:
- GB-A- 2 080 900
- US-A- 2 540 368

## Beschreibung

Die vorliegende Erfindung betrifft eine Rohrverschraubung gemäß dem Oberbegriff der Ansprüche 1 und 9.

Bei einer aus dem DE-GM 87 00 415 bekannten Rohrverschraubung wird der Klemmring durch die Längsbewegung der Überwurfmutter beim Aufschrauben auf den Grundkörper mitgenommen und gegen den kontaktierenden Bereich des Rohrendes gedrückt. Die dem Grundkörper zugeordnete Stimfläche des Klemmringes wird gegen den elastisch verformbaren Dichtring gedrückt, um die Dichtwirkung sicherzustellen. Gemäß einer Prüfvorschrift darf es nur zum Bruch des Rohres durch Zerreißen kommen, wenn auf dieses entsprechend hohe Zugkräfte aufgebracht werden, ohne daß das Rohr aus der Verschraubung gezogen wird. Die Rohrverschraubung als solche muß absolut dicht bleiben. Wenn sich das Rohr durch diese Zugkräfte in Richtung vom Grundkörper wegbewegt, wird bei der vorbekannten Konstruktion der Klemmring auch in Verschieberichtung des Rohres bewegt. Dieser Weg ist relativ gering, da durch die Konizität der Außenfläche des Klemmringes hohe Kräfte aufgebracht werden. Die auf den Dichtring wirkenden Verformungskräfte werden dadurch verringert, so daß die volle Kraft zum Abdichten des Rohres nicht mehr vollständig ausgenutzt werden kann.

Es ist darüber hinaus aus der US-PS 25 40 368 eine Rohrverschraubung bekannt, bei der ein Klemmring durch eine Längsbewegung der Überwurfmutter beim Aufschrauben auf den Grundkörper mittels einer konischen Preßfläche verschoben und über einen als Ansatz an dem Grundkörper ausgeführten Druckring gegenüber einer konischen Preßfläche der Überwurfmutter verspannt wird. Dieser Klemmring drückt direkt auf den in eine in den Grundkörper eingearbeitete Ringnut eingelegten Dichtring und dichtet damit die Verbindung gegenüber Druck ab. Bei einer Belastung des Rohres in der vorstehend bei der DE-GM 87 00 415 beschriebenen Weise wird jedoch der Klemmring aus der Rohrverschraubung herausgezogen und damit der Dichtring entlastet.

In der GB-PS 20 80 900 ist eine Rohrverschraubung dargestellt, in der ein Ring, gegenüber dem sich der Klemmring einer Rohrverschraubung abstützt, gegen eine elastische Dichtung durch axiales Verspannen mittels einer Überwurfmutter gepreßt wird, doch wird hierbei ebenfalls bei Belastung der Rohrverschraubung durch Herausziehen des Rohres die Dichtung durch Verschieben des Abstützungsringes entlastet und damit die Dichtwirkung reduziert oder aufgehoben.

Der vorliegenden Erfindung liegt die Aufgabe zugrunde, eine Rohrverschraubung der gattungsgemäßen Art so weiterzuentwickeln, daß auch die Dichtung noch unter den von der Überwurfmutter erzeugten Verformungskräften steht, wenn die Rohrleitung und der Klemmring sich gegenüber der Überwurfmutter und dem Grundkörper durch entsprechend große Zugkräfte in axialer Richtung vom Grundkörper wegbewegen.

Die gestellte Aufgabe wird durch Verwendung eines Druckringes gelöst, der zum einen eine der Keilfläche des Klemmringes angepaßte innere Kontaktfläche und eine an der Druckfläche der Überwurfmutter anliegende Preßfläche aufweist. Dieser Druckring übergreift zum anderen die Außenfläche und die dem Dichtring zugewandt liegende Stimfläche des Klemmringes zumindestens teilweise, wobei an dem Druckring an der dem Grundkörper zugeordneten Seite ein gegenüber der Preßfläche vorstehender Ring oder Ansatz axial verschieblich angeordnet ist. Dieser axial verschiebliche Ring oder Ansatz kontaktiert an seiner dem Grundkörper zugeordneten Stimseite den Dichtring und stützt sich beim Verspannen der Rohrverschraubung mit seiner gegenüberliegend angeordneten Seite an dem Druckring ab. Durch diese Lösung wird erreicht, daß ausschließlich der Klemmring von der sich bewegenden Rohrleitung mitgenommen wird, während der Druckring in seiner Stellung verharrt. Die Verformungskräfte beim Verspannen der Rohrverschraubung werden hierbei ausschließlich durch den Druckring auf den Dichtring übertragen und somit bleiben diese Kräfte auch voll erhalten, wenn sich die Rohrleitung gegenüber der Überwurfmutter und dem Grundkörper in axialer Richtung verschiebt. Durch die äußere konische Keilfläche des Klemmringes werden die Anpreßkräfte größer, je größer auch der Verschiebewege des Klemmringes wird.

Die Druckfläche der Überwurfmutter ist konisch ausgebildet und entgegengesetzt zur konischen Innenfläche des Grundkörpers angeordnet, wobei die Preßfläche des Druckringes eine entsprechende, sich über einen Teil der Länge des Druckringes erstreckende Fläche ist, und der Druckring an der dem Grundkörper zugeordneten Seite einen gegenüber der konischen Preßfläche vorstehenden, den Dichtring kontaktierenden Ansatz aufweist. Die innere Kontaktfläche des Druckringes erstreckt sich im wesentlichen über den Bereich der äußeren Preßfläche. Durch diese Konstruktion wird erreicht, daß die allgemein übliche Bauart der Überwurfmutter verwendbar ist.

Gemäß einer weiteren Ausprägung der Erfindung ist vorgesehen, daß die Druckfläche der Überwurfmutter und die Preßfläche des Druckringes senkrecht zur Längsachse der Rohrverschraubung stehen, und daß die innere Kontaktfläche des Druckringes entgegengesetzt geneigt zur Innenfläche des Grundkörpers steht. Bei dieser Ausführung ist vorteilhaft, daß die von der Überwurfmutter erzeugten Kräfte in Längsrichtung der Rohrverschraubung auf den Druckring einwirken. Bei dieser Ausführung wird eine kompakte Bauweise erreicht, wenn die Keilfläche des Klemmringes sich über einen dem Grundkörper abgewandt liegenden Bereich erstreckt, an dem sich eine entgegengesetzt geneigte, konische Außenfläche anschließt, und daß die Außenfläche des Druckringes an dem dem Druckring zugewandt liegenden Endbereich konisch ausgebildet ist. Dadurch ergibt sich, daß die den Dichtring kontaktierende Fläche des Druckringes den notwendigen Durchmesser erhält. Dieser Durchmesser ist kleiner als der der Preßfläche des Druckringes.

Weitere Kennzeichen und Merkmale der vorliegenden Erfindung sind Gegenstand von weiteren Unteransprüchen und ergeben sich aus der nachfolgenden Beschreibung bevorzugter Ausführungsbeispiele.

Es zeigen:
- Figur 1: eine erste Ausführungsform der erfindungsgemäßen Rohrverchraubung im Vertikalschnitt,
- Figur 2: den Druckring der Rohrverschraubung nach der Figur 1 im Schnitt.
- Figur 3: eine weitere erfindungsgemäße Rohrverschraubung im Vertikalschnitt

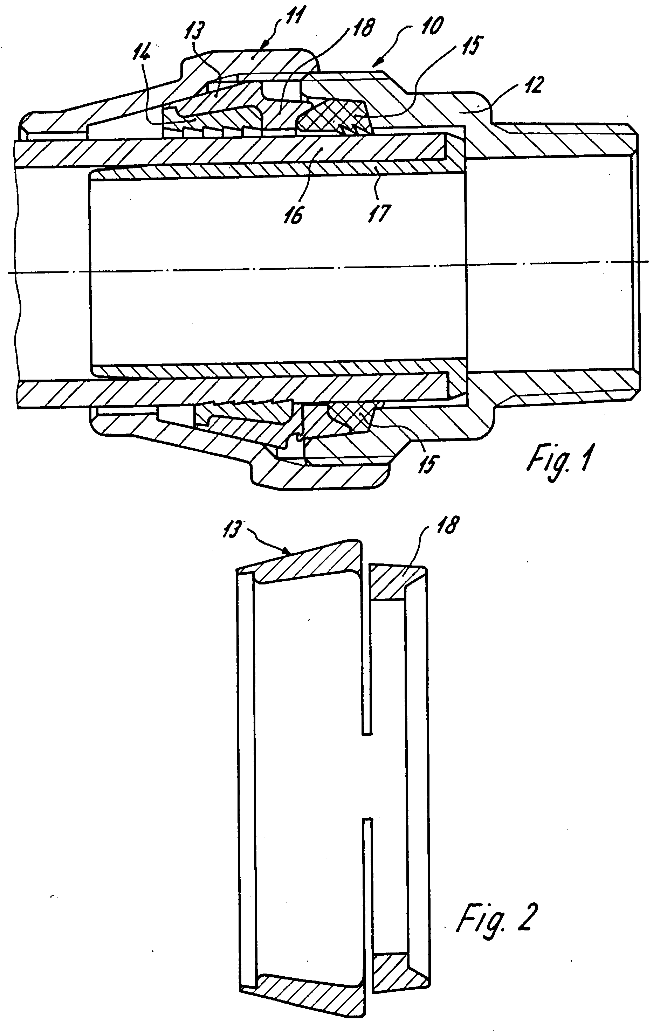

Die in den Figuren 1 und 2 dargestellte Rohrverschraubung 10 beinhaltet eine Überwurfmutter 11, die auf einen mit einem Außengewinde versehenen Grundkörper 12 aufgeschraubt ist. Die Rohrverschraubung beinhaltet außerdem einen Druckring 13, einen Klemmring 14 und einen Dichtring 15. Der Druckring 13 und der Klemmring 14 sind aus hochfestem Kunststoff-Material, während der Dichtring 15 aus einem elastisch verformbaren Material besteht. Die obere Hälfte der Figur 1 zeigt den Zustand bei noch nicht angezogener Überwurfmutter 11, die untere Hälfte den Zustand bei angezogener Überwurfmutter 11. In den Grundkörper 12 ist ein aus Kunststoff gefertigtes Rohr 16 eingesteckt. Der Grundkörper weist eine senkrecht zur Längsachse stehende Ringfläche auf, gegen die sich die Stimfläche eines in das Rohr 16 eingesteckten Stützrohres 17 abstützt. Der Grundkörper 12 hat eine konische Innenfläche, die so angeordnet ist, daß der Durchmesser an der der Überwurfmutter 11 abgewandten Seite am kleinsten ist. Der Druckring 13 hat eine konische Keilfläche, die entgegengesetzt zur konischen Innenfläche des Grundkörpers 12 steht. Die Außenfläche des Klemmringes 14 und die dem Grundkörper 12 zugewandt liegende Stimfläche des Klemmringes 14 wird bei beiden Ausführungen von dem Druckring 13 übergriffen. Demzufolge hat jeder Druckring 13 an der dem Dichtring 15 zugewandt liegenden Seite einen kreisringförmigen Ansatz 18, dessen Innendurchmesser ein klein wenig größer ist als der Außendurchmesser des Rohres 16. Bei der Ausführung nach der Figur 1 ist die Überwurfmutter mit einer konischen Innenfläche des Grundkörpers 12 versehen. Der Druckring 13 ist ebenfalls mit einer konischen Preßfläche versehen, die der konischen Druckfläche der Überwurfmutter entspricht und mit dieser in Kontakt steht. Diese konische Preßfläche erstreckt sich bis zum Ansatz 18 hin. Die Länge entspricht in etwa der Länge des gesamten Klemmringes 14. Die Innenfläche des Klemmringes 13 entspricht der Konizität der äußeren Keilfläche des Klemmringes 14.

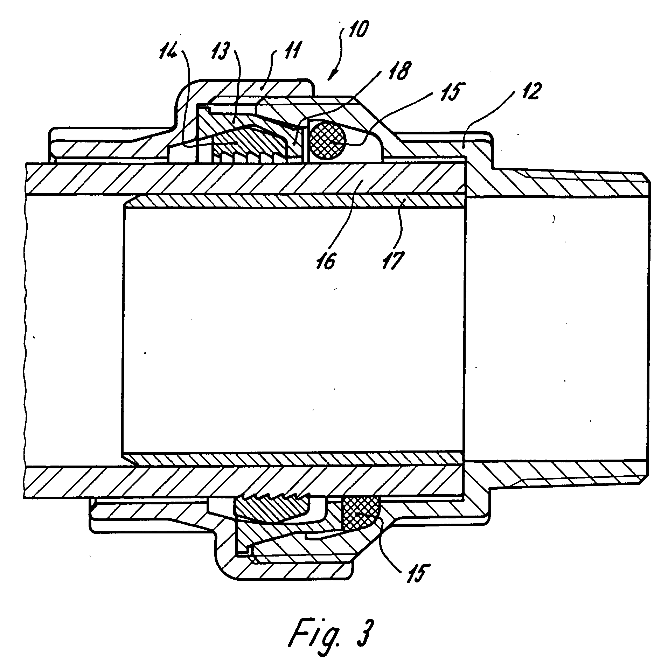

Bei der Ausführung nach der Figur 3 stehen die Preßfläche der Überwurfmutter 11 und die Druckfläche des Druckringes 13 senkrecht zur Längsachse der Rohrverschraubung 10. Der Klemmring 14 hat wiederum eine konische Außenfläche, die entgegengesetzt geneigt ist zur konischen Innenfläche des Grundkörpers 12. Diese Keilfläche erstreckt sich jedoch nur über annähemd die halbe Länge des Klemmringes 14. Sie liegt außerdem dem Grundkörper 12 abgewandt. Die dem Grundkörper 12 zugewandt liegende Hälfte des Klemmringes 14 ist entgegengesetzt geneigt. Die Innenkontur des Druckringes 13 entspricht der Außenkontur des Klemmringes 14.

Die Innenfläche des Klemmringes 14 ist sägezahnförmig ausgebildet, so daß sich die Zähne in den äußeren Bereich des Rohres 16 einschneiden können.

Aus den Figuren 1 und 3 ergibt sich, daß beim Anziehen der Überwurfmutter 11 durch die Gestaltung ihrer Innenkontur und der Gestaltung des Druckringes 13 sich der Druckring 13 in Richtung zum Grundkörper 12 bzw. zum Dichtring 15 verschiebt. Dabei erfolgt eine Mitnahme des Klemmringes 14, wobei sich gleichzeitig die Zähne der Innenkontur in das Rohr 16 einschneiden. Die Verschiebung des Druckringes 13 bewirkt außerdem, daß der Dichtring 15 zusammengepreßt wird. Aus der Figur ergibt sich femer, daß auch dann noch die Verformungskräfte des Druckringes 13 auf den Dichtring 15 erhalten bleiben, wenn sich durch eine Verschiebung des Rohres 16 der Klemmring 14 von dem Grundkörper 12 wegbewegt. Dabei bewirkt der Druckring 13, daß der Klemmring noch stärker abgepreßt wird. Die Verschiebebewegung kann beispielsweise bei einer Prüfung durch eine Zugbelastung hervorgerufen werden. Die Bewegung des Rohres kann aber auch durch Druckstöße im Inneren des Rohres hervorgerufen werden.

Die Darstellung nach der Figur 2 zeigt den Druckring 13 der Ausführung gemäß der Figur 1 als Einzelheit. Daraus geht hervor, daß der Ansatz 18 mit dem restlichen Teil des Druckringes 13 über zwei einander gegenüberliegende Zungen verbunden ist. Dazu ist der Übergangsbereich zwischen dem Ansatz 18 und dem konischen Teil des Druckringes 13 eingestochen. Die Figur zeigt außerdem, daß in dem konischen Bereich zwei zu den Verbindungszungen um 90° versetzte Nuten vorgesehen sind, die in Längsrichtung verlaufen. Die Figuren 1 und 3 zeigen außerdem, daß der Grundkörper 12 an der der Überwurfmutter 11 abgewandten Seite mit einem Außengewinde versehen ist.

## Patentansprüche

1. Rohrverschraubung für das druckdichte und lösbare Anschließen von Rohren, mit einem mindestens eine konische Innenfläche aufweisenden Grundkörper (12) zur Aufnahme des Rohrendbereiches (16) und eines elastisch verformbaren Dichtringes (15), mit einer auf den Grundkörper (12) aufgeschraubten Überwurfmutter (11) mit einer Druckfläche und mit einem auf den Rohrendbereich (10) aufsteckbaren Klemmring (14) mit einer entgegengesetzt zur Innenfläche des Grundkörpers (12) stehenden äußeren Keilfläche, einem die äußere Keilfläche des Klemmringes (14) und die dem Dichtring (15) zugewandt liegende Stimfläche des Klemmrings (14) zumindestens teilweise übergreifenden Druckring (13) mit einer der Keilfläche des Klemmrings (14) angepaßten inneren Kontaktfläche und mit einer an der Druckfläche der Überwurfmutter (11) anliegenden Preßfläche,
**dadurch gekennzeichnet, daß**
an dem Druckring (13) an der dem Grundkörper (12) zugeordneten Seite ein gegenüber der Preßfläche vorstehender Ring oder Ansatz (18) axial verschieblich angeordnet ist, der an seiner dem Grundkörper (12) zugeordneten Stirnseite den Dichtring (15) kontaktiert und sich beim Verspannen der Rohrverschraubung mit seiner gegenüberliegend angeordneten Seite an dem Druckring (13) abstützt.

2. Rohrverschraubung nach Anspruch 1, **dadurch gekennzeichnet, daß** die Druckfläche der Überwurfmutter (11) konisch ausgebildet ist und entgegengesetzt zur konischen Innenfläche des Grundkörpers (12) steht, daß die Preßfläche des Druckringes (13) eine entsprechend ausgebildete, sich über einen Teil der Länge des Druckringes (13) erstreckende Fläche ist und daß die innere Kontaktfläche des Druckringes (13) sich im wesentlichen über den Bereich der äußeren Preßfläche erstreckt.

3. Rohrverschraubung nach Anspruch 1, **dadurch gekennzeichnet, daß** die Druckfläche der Überwurfmutter (11) und die Preßfläche des Druckringes (13) senkrecht zur Längsachse der Rohrverschraubung (10) stehen, und daß die innere Kontaktfläche des Druckringes (13) konisch ausgebildet und entgegengesetzt geneigt zur Innenfläche des Grundkörpers (12) steht.

4. Rohrverschraubung nach Anspruch 3, **dadurch gekennzeichnet, daß** die Keilfläche des Klemmringes (14) sich über einen dem Grundkörper (12) abgewandtliegenden Bereich erstreckt, an den sich eine entgegengesetzt geneigte konische Außenfläche anschließt, und daß die Außenfläche des Druckringes (13) an dem den Grundkörper (12) zugewandtliegenden Ende konisch ausgebildet ist.

5. Rohrverschraubung nach Anspruch 4, **dadurch gekennzeichnet, daß** sich an dem konisch ausgebildeten Teil des Druckringes (13) der Ansatz (18) anschließt.

6. Rohrverschraubung nach einem oder mehreren der vorhergehenden Ansprüche, **dadurch gekennzeichnet, daß** der Innendurchmesser des Ansatzes (18) des Druckringes (13) dem Außendurchmesser des Rohres (16) entspricht oder ein klein wenig größer ist.

7. Rohrverschraubung nach einem oder mehreren der vorhergehenden Ansprüche, **dadurch gekennzeichnet, daß** der Klemmring (14) einen Längsschlitz aufweist.

8. Rohrverschraubung nach einem oder mehreren der vorhergehenden Ansprüche, **dadurch gekennzeichnet, daß** der konisch ausgebildete Bereich des Druckringes (13) im Übergangsbereich zum Ansatz (18) durch mindestens zwei durch Einstiche gebildete Zungen verbunden ist.

9. Rohrverschraubung für das druckdichte und lösbare Anschließen von Rohren, mit einem mindestens eine konische Innenfläche aufweisenden Grundkörper (12) zur Aufnahme des Rohrendbereiches (16) und eines elastisch verformbaren Dichtringes (15), mit einer auf den Grundkörper (12) aufgeschraubten Überwurfmutter (11) mit einer Druckfläche und mit einem auf den Rohrendbereich (10) aufsteckbaren Klemmring (14) mit einer entgegengesetzt zur Innenfläche des Grundkörpers (12) stehenden äußeren Keilfläche, einem die äußere Keilfläche des Klemmringes (14) und die dem Dichtring (15) zugewandt liegende Stimfläche des Klemmringes (14) zumindestens teilweise übergreifenden Druckring (13) mit einer der Keilfläche des Klemmringes (14) angepaßten inneren Kontaktfläche und mit einer an der Druckfläche der Überwurfmutter (11) anliegenden Preßfläche, **dadurch gekennzeichnet, daß** an dem Druckring (13) an der dem Grundkörper (12) zugeordneten Seite ein gegenüber der Preßfläche vorstehender Ring oder Ansatz (18) angeordnet ist, der an seiner dem Grundkörper (12) zugeordneten, Seite den Dichtring (15) kontaktiert, wobei die Preßfläche des Druckringes (13) sowie die der Preßfläche zugeordnete Druckfläche der Überwurfmutter (11) im wesentlichen senkrecht zur Achse der Rohrverschraubung angeordnet sind.

## Claims

1. A threaded pipe joint for pressure-tightly and releasably connecting pipes, comprising a main body (12) having at least one conical inside surface, for receiving the pipe end region (16) and an elastically deformable sealing ring (15), a union nut (11) with a compression surface, which is screwed onto the main body (12), and a clamping ring (14)which can be fitted onto the pipe end region (10), with an outer wedge surface which is in opposite relationship to the inside surface of the main body (12), a compression ring (13) with an inner contact surface which is adapted to the wedge surface of the clamping ring (14) and with a pressing surface which bears against the compression surface of the union nut (11), which compression ring (13) at least partially engages over the outer wedge surface of the clamping ring (14) and the end face of the clamping ring (14), which is towards the sealing ring (15), characterised in that axially displaceably arranged on the compression ring (13) at the side associated with the main body (12) is a ring or projection (18) which projects with respect to the pressing surface and which at its face associated with the main body (12) contacts the sealing ring (15) and when the threaded pipe joint is tightened bears with its oppositely arranged side against the compression ring (13).

2. A threaded pipe joint according to claim 1 characterised in that the compression surface of the union nut (11) is of a conical configuration and is in opposite relationship to the conical inside surface of the main body (12), that the pressing surface of the compression ring (13) is a surface which is of a corresponding configuration and which extends over a part of the length of the compression ring (13), and that the inner contact surface of the compression ring (13) extends substantially over the region of the outer pressing surface.

3. A threaded pipe joint according to claim 1 characterised in that the compression surface of the union nut (11) and the pressing surface of the compression ring (13) are perpendicular to the longitudinal axis of the threaded pipe joint (10) and that the inner contact surface of the compression spring (13) is of a conical configuration and is oppositely inclined relative to the inside surface of the main body (12).

4. A threaded pipe joint according to claim 3 characterised in that the wedge surface of the clamping ring (14) extends over a region which is remote from the main body (12) and which is adjoined by an oppositely inclined conical outside surface, and that the outside surface of the compression ring (13) is of a conical configuration at the end which is towards the main body (12).

5. A threaded pipe joint according to claim 4 characterised in that the projection (13) adjoins the conical portion of the compression ring (13).

6. A threaded pipe joint according to one or more of the preceding claims characterised in that the inside diameter of the projection (18) of the compression ring (13) corresponds to the outside diameter of the pipe (16) or is a little larger.

7. A threaded pipe joint according to one or more of the preceding claims characterised in that the clamping ring (14) has a longitudinal slot.

8. A threaded pipe joint according to one or more of the preceding claims characterised in that the conical region of the compression ring (13) is connected in the transitional region to the projection (18) by at least two tongues forming slits.

9. A threaded pipe joint for pressure-tightly and releasably connecting pipes, comprising a main body (12) having at least one conical inside surface, for receiving the pipe end region (16) and an elastically deformable sealing ring (15), a union nut (11) with a compression surface, which is screwed onto the main body (12), and a clamping ring (14)which can be fitted onto the pipe end region (10), with an outer wedge surface which is in opposite relationship to the inside surface of the main body (12), a compression ring (13) with an inner contact surface which is adapted to the wedge surface of the clamping ring (14) and with a pressing surface which bears against the compression surface of the union nut (11), which compression ring (13) at least partially engages over the outer wedge surface of the clamping ring (14) and the end face of the clamping ring (14), which is towards the sealing ring (15), characterised in that arranged on the compression ring (13) at the side associated with the main body (12) is a ring or projection (18) which projects with respect to the pressing surface and which at its side associated with the main body (12) contacts the sealing ring (15), wherein the pressing surface of the compression ring (13) and the compression surface of the union nut (11), which is associated with the pressing surface, are arranged substantially perpendicularly to the axis of the threaded pipe joint.

## Revendications

1. Raccord vissé de tube pour le raccordement étanche à la pression et amovible de tubes, avec un corps de base (12) présentant au moins une surface intérieure conique pour le logement de la zone d'extrémité (16) de tube et une bague d'étanchéité (15) élastiquement déformable, avec un écrouraccord (11) vissé sur le corps de base (12) avec une surface de pression et avec une bague de serrage (14) à enfiler sur la zone d'extrémité (10) de tube avec une surface en coin extérieure opposée à la surface intérieure du corps de base (12), une bague de pression (13) passant au moins en partie sur la surface en coin extérieure de la bague de serrage (14) et sur la surface frontale, tournée vers la bague d'étanchéité (15), de la bague de serrage (14), avec une surface de contact intérieure, adaptée à la surface en coin de la bague de serrage (14) et avec une surface de compression s'appliquant contre la surface de pression de l'écrou-raccord (11),
caractérisé en ce que
sur la bague de pression (13), sur le côté associé au corps de base (12), est placé, axialement coulissant, une bague ou appendice (18), dépassant de la surface de compression, qui sur son côté frontal, associé au corps de base (12), est en contact avec la bague d'étanchéité (15) et prend appui contre la bague de pression (13), avec son côté opposé, lors du serrage du raccord vissé de tube.

2. Raccord vissé de tube selon la revendication 1, caractérisé en ce que la surface de pression de l'écrouraccord (11) est conique et se trouve à l'opposé de la surface intérieure conique du corps de base (12), en ce que la surface de compression de la bague de pression (13) est une surface conformée en conséquence, s'étendant sur une partie de la longueur de la bague de pression (13) et en ce que la surface de contact intérieure de la bague de pression (13) s'étend sensiblement sur la zone de la surface de compression extérieure.

3. Raccord vissé de tube selon la revendication 1, caractérisé en ce que la surface de pression de l'écrouraccord (11) et la surface de compression de la bague de pression (13) sont perpendiculaires à l'axe longitudinal du raccord vissé de tube (10), et en ce que la surface de contact intérieure de la bague de pression (13) est conique et inclinée en sens opposé par rapport à la surface intérieure du corps de base (12).

4. Raccord vissé de tube selon la revendication 3, caractérisé en ce que la surface en coin de la bague de serrage (14) s'étend sur une zone tournée à l'opposé du corps de base (12), à laquelle fait suite une surface extérieure conique inclinée en sens opposé, et en ce que la surface extérieure de la bague de pression (13) est conique à l'extrémité tournée vers le corps de base (12).

5. Raccord vissé de tube selon la revendication 4, caractérisé en ce que l'appendice (18) fait suite à la partie conique de la bague de pression (13).

6. Raccord vissé de tube selon une ou plusieurs des revendications précédentes, caractérisé en ce que le diamètre intérieur de l'appendice (18) de la bague de pression (13) correspond au diamètre extérieur du tube (16) ou est légèrement plus grand.

7. Raccord vissé de tube selon une ou plusieurs des revendications précédentes, caractérisé en ce que la bague de serrage (14) présente une fente longitudinale.

8. Raccord vissé de tube selon une ou plusieurs des revendications précédentes, caractérisé en ce que la zone conique de la bague de pression (13) est reliée dans la zone de transition avec l'appendice (18), par au moins deux languettes formées par des entailles.

9. Raccord vissé de tube pour le raccordement étanche à la pression et amovible de tubes, avec un corps de base (12) présentant au moins une surface intérieure conique pour le logement de la zone d'extrémité (16) de tube et une bague d'étanchéité (15) élastiquement déformable, avec un écrouraccord (11) vissé sur le corps de base (12) avec une surface de pression et avec une bague de serrage (14) à enfiler sur la zone d'extrémité (10) de tube avec une surface en coin extérieure opposée à la surface intérieure du corps de base (12), une bague de pression (13) passant au moins en partie sur la surface en coin extérieure de la bague de serrage (14) et sur la surface frontale, tournée vers la bague d'étanchéité (15), de la bague de serrage (14), avec une surface de contact intérieure, adaptée à la surface en coin de la bague de serrage (14) et avec une surface de compression s'appliquant contre la surface de pression de l'écrou-raccord (11), caractérisé en ce que
sur la bague de pression (13), sur le côté associé au corps de base (12), est placé, une bague ou appendice (18), dépassant de la surface de compression, qui sur son côté frontal, associé au corps de base (12), est en contact avec la bague d'étanchéité (15), la surface de compression de la bague de pression (13) ainsi que la surface de pression, associée à la surface de compression, de l'écrou-raccord (11), étant sensiblement perpendiculaires à l'axe du raccord vissé.
